# EUROPÄISCHE PATENTSCHRIFT

(11) **EP 2 765 667 B1**
(45) Veröffentlichungstag und Bekanntmachung des Hinweises auf die Patenterteilung: **28.12.2016**
(21) Anmeldenummer: 14154056.7
(22) Anmeldetag: 06.02.2014
(51) Int. Cl.: H02J 3/14, H02J 3/24, H02J 3/06, H02J 3/00

(54) **Verfahren und Vorrichtung zum Betreiben eines Stromnetzes**
Method and device for operating a power network
Procédé et dispositif de fonctionnement d'un réseau électrique

(30) Priorität: 07.02.2013 DE 102013202005
(43) Veröffentlichungstag der Anmeldung: 13.08.2014
(73) Patentinhaber: Siemens Aktiengesellschaft, 80333 München (DE)
(72) Erfinder: Hubauer, Thomas, 81475 München (DE); Gaxiola, Enrique, Dr., 13090 Aix en Provence (FR); Heidenreich, Alla, 91052 Erlangen (DE); Hess, Erwin, Dr., 85521 Ottobrunn (DE); Krebs, Rainer, Dr., 91052 Erlangen (DE); Lamparter, Steffen, Dr., 85622 Feldkirchen (DE); Rusitschka, Sebnem, 81543 Muenchen (DE)

(56) Entgegenhaltungen:
- EP-A1- 1 134 867
- WO-A1-2013/129958
- DE-A1-102011 075 231
- TAYLOR P C ET AL: "Distributed voltage control in AuRA-NMS", 2010 IEEE POWER AND ENERGY SOCIETY GENERAL MEETING : [IEEE PES-GM 2010] ; MINNEAPOLIS, MINNESOTA, USA, 25 - 29 JULY 2010, IEEE, PISCATAWAY, NJ, USA, 25. Juli 2010 (2010-07-25), Seiten 1-7, XP031985655, DOI: 10.1109/PES.2010.5589773 ISBN: 978-1-4244-6549-1

## Beschreibung

Die vorliegende Erfindung betrifft ein Verfahren und eine Vorrichtung zum Betreiben eines eine Vielzahl von Netzwerkelementen umfassenden Stromnetzes.

Stromausfälle in Stromnetzen, das heißt die unbeabsichtigte Unterbrechung der Elektrizitätsversorgung, können schwerwiegende lokale, regionale oder überregionale Folgen haben. Es lassen sich dabei Stromausfälle unterschiedlicher Dauer und unterschiedlicher Auswirkungen unterscheiden. Kurzzeitige Spannungsabsenkungen, beispielsweise infolge von Überlastungen einzelner Netzwerkkomponenten, werden auch als Brown-Out bezeichnet und können die Vorstufe zu einem Mittel- oder langfristigen Stromausfall, einem so genannten Black-Out, darstellen.

Zur Vermeidung von Stromausfällen ist es möglich, ein laufendes Stromnetz im Rahmen des so genannten Wide Area Monitoring, Protection and Control-Verfahrens (WAMPAC) für Übertragungs-und Verteilungsnetze zu überwachen (monitoring), zu schützen (protection) und zu steuern (control).

Die Überwachung ermittelt statische sowie dynamische Informationen des Stromnetzes. Im Rahmen des Schützens und Steuerns werden die ermittelten Informationen verwendet, um beispielsweise kritische Situationen, das heißt kritische Zustände des Stromnetzes, zu erkennen und geeignete Gegenmaßnahmen zu ergreifen. Ohne derartige Gegenmaßnahmen können anfängliche kleinere oder lokale Probleme zu Kaskaden von Ereignissen führen, an deren Ende schlimmstenfalls ein teilweiser oder vollständiger Black-Out des Stromnetzes steht.

Herkömmliche WAMPAC-Systeme stellen dem technischen Personal eines Stromnetzbetreibers jedoch allenfalls eine geringfügige informationstechnische Unterstützung zur Verfügung. Die Behebung derartiger Stromausfälle, insbesondere die vollständige Wiederherstellung der Stromversorgung nach einem Black-Out, ist daher auch für technisch erfahrenes Personal eines Stromnetzbetreibers aufwändig und teuer, da es beispielsweise lediglich allgemeine Richtlinien zur vollständigen Wiederherstellung der Stromversorgung eines Stromnetzes nach einem Black-Out gibt. Das notwendige Wissen ist in der Regel über eine Vielzahl von Quellen verteilt oder liegt lediglich in nicht formalisierter Form vor. Zudem ist eine aufwändige Kommunikation zwischen unterschiedlichen Stromnetzbetreibern notwendig, um lokale Maßnahmen überregional abzustimmen und unerwünschte Effekte im Stromnetz zu vermeiden.

Bekannte Schutzvorrichtungen verwenden in der Regel lediglich lokal verfügbare Informationen wie Spannung, verfügbare Energie (Menge und Phase) oder Blindleistung, um Generatoren und Verbraucher beispielsweise durch eine vorübergehende Trennung vom Stromnetz zu schützen. Derartige lokale Handlungen und Maßnahmen können jedoch erhebliche Auswirkungen auf die Stabilität des Stromnetzes haben.

EP 1 134 867 A1 beschreibt ein Verfahren zum Bewerten einer Stabilität eines elektrischen Energieversorgungsnetzes.

DE 10 2011 075 231 A1 beschreibt ein Verfahren zum Betrieb einer Anlage, bei dem Informationen mittels eines logikbasierten Modells in Kombination mit einem Zustandsüberwachungsmodell ausgewertet werden, und anhand der ausgewerteten Informationen die Anlage überwacht oder angesteuert wird.

TAYLOR P C ET AL.: "Distributed voltage control, 2010 IEEE POWER AND ENERGY SOCIETY GENERAL MEETING: [IEEE PES-GM 2010]; MINNEAPOLIS, MINNESOTA, USA, 25 - 29 JULY 2010, IEEE, PISCATAWAY, NJ, USA, 25. Juli 2010 (2010-07-25), Seiten 1-7, XP031985655, DOI: 10.1109/PES.2010.5589773, ISBN: 978-1-4244-6549-1 beschreibt eine Spannungssteuerung für ein autonomes regional aktives Führungssystem bei einer dezentralen Stromerzeugung, welche eine Case-Based-Reasoning (CBR) Technik umfasst.

WO 2013/129958 A1 beschreibt ein Verfahren für eine computerunterstützte Steuerung eines elektrischen Stromnetzes mit einer Vielzahl von Knoten.

Eine Aufgabe der Erfindung ist es demnach, das Betreiben eines Stromnetzes zu verbessern.

Diese Aufgabe wird durch das Verfahren nach Anspruch 1 und die Vorrichtung nach Anspruch 12 gelöst. Bevorzugte Ausführungsformen sind in den abhängigen Ansprüchen angegeben.

Eine Schalthandlung umfasst beispielsweise ein Schalten mittels eines Netzwerkelements und/oder ein Messen mittels eines Sensors.

Das vorgeschlagene Verfahren ermöglicht eine formalisierte Vorgehensweise zur Behebung beispielsweise kritischer Zustände eines Stromnetzes und vermeidet ein Verfahren nach dem Prinzip Versuch und Irrtum. Auf diese Weise können Stromausfälle in Form von Brown-Outs oder Black-Outs vermieden beziehungsweise behoben werden. Insbesondere erfolgt das Ableiten geeigneter Schalthandlungen zur Behebung kritischer Zustände automatisiert und formalisiert, so dass die in Betracht gezogenen Schalthandlungen nicht mehr von dem jeweiligen technischen Personal und dem jeweilig in formaler und informaler Form verfügbaren Wissen abhängen. Dies stellt sicher, dass zumindest keine bekannte Lösung übersehen wird.

Weiterhin wird beispielsweise der Prozess des Hochfahrens eines Stromnetzes nach einem Black-Out beschleunigt und für die Benutzer, beispielsweise das Personal des Netzbetreibers, transparent gestaltet und die Koordination der Handlungen zwischen den Beteiligten verbessert. Es lassen sich somit auch falsche Entscheidungen vermeiden oder korrigieren, um mögliche weitere, unerwünschte Folgeeffekte im Stromnetz auszuschließen.

In Ausführungsformen des Verfahrens umfasst das Anweisen der abgeleiteten Schalthandlung ein Anzeigen der abgeleiteten Schalthandlung mittels einer Anzeigevorrichtung für einen Benutzer. Die Anzeigevorrichtung ist zum Beispiel Teil einer Leitwarte und weist einen Bildschirm auf.

Auf diese Weise ist sichergestellt, dass der Benutzer, beispielsweise das technische Personal des Stromnetzbetreibers, aus einer korrekten Menge möglicher Schalthandlungen diejenigen auswählen kann, die aus seiner fachmännischen Sicht geeignet sind, den gegenwärtigen Zustand des Stromnetzes zu beheben. Insbesondere ist es möglich, dass sich der Benutzer mit anderen Benutzern, beispielsweise technischem Personal eines anderen Stromnetzbetreibers, vor einer tatsächlichen Ausführung über die auszuführenden Schalthandlungen abstimmt.

In weiteren Ausführungsformen des Verfahrens umfasst das Anweisen der abgeleiteten Schalthandlung ein automatisches Ausführen der abgeleiteten Schalthandlung durch eine Schaltvorrichtung zur Steuerung des Stromnetzes.

Dies ermöglicht ein effizientes und schnelles automatisches Eingreifen, um einen sich andeutenden oder schon bestehenden kritischen Zustand des Stromnetzes zu vermeiden beziehungsweise zu beheben. Das automatische Ausführen kann dabei mit dem Anzeigen der abgeleiteten Schalthandlungen kombiniert werden, um ein manuelles Eingreifen durch technisches Personal zu ermöglichen.

In weiteren Ausführungsformen des Verfahrens erfolgen ein Erfassen eines Wertes eines Stromnetz-Parameters sowie ein Erfassen des Zustands des Stromnetzes in Abhängigkeit von dem erfassten Wert des Stromnetz-Parameters.

Ein Stromnetz-Parameter ist beispielsweise eine elektrische Spannung, eine verfügbare Energie (Menge und Phase), eine Kapazität oder eine Blindleistung eines Netzwerkelements oder eines Teilnetzes des Stromnetzes. Auf diese Weise lassen sich vielfältige Zustände des Stromnetzes in Abhängigkeit von verschiedenen, erfassbaren Werten unterschiedlicher Stromnetz-Parameter erfassen.

Das Erfassen eines Wertes eines Stromnetz-Parameters ist beispielsweise durch ein Messen mittels eines Sensors oder durch eine manuelle Eingabe eines Benutzers möglich.

Die Möglichkeit für einen Benutzer, eine manuelle Eingabe vorzunehmen, erlaubt es beispielsweise dem technischen Personal des Netzbetreibers, das Verfahren gezielt mit einem bestimmten Zustand zu starten, ohne dass zunächst ein oder mehrere Messwerte erfasst werden müssen.

In weiteren Ausführungsformen des Verfahrens erfolgen ein Erfassen eines Zustands zumindest eines der Vielzahl der Netzwerkelemente sowie ein Erfassen des Wertes des Stromnetz-Parameters in Abhängigkeit von dem erfassten Zustand des zumindest einen Netzwerkelements.

Somit ist es möglich, den globalen Zustand des Stromnetzes in Abhängigkeit von den Zuständen der Vielzahl von Netzwerkelementen zu erfassen und somit lokale Zustände beispielsweise von ein oder mehrere Teilnetze ausbildenden Netzwerkelementen für die Ableitung geeigneter Schalthandlungen heranzuziehen.

In weiteren Ausführungsformen des Verfahrens erfolgen ein Erfassen eines Wertes eines Netzwerkelement-Parameters sowie ein Erfassen des Zustands des Netzwerkelements in Abhängigkeit von dem erfassten Wert des Netzwerkelement-Parameters.

Ein Netzwerkelement-Parameter ist beispielsweise eine elektrische Spannung, eine verfügbare Energie (Menge und Phase), eine Kapazität oder eine Blindleistung eines Netzwerkelements des Stromnetzes. Auf diese Weise lassen sich vielfältige Zustände eines betrachteten Netzwerkelements in Abhängigkeit von verschiedenen, erfassbaren Werten unterschiedlicher Netzwerkelement-Parameter erfassen.

Das Erfassen eines Wertes eines Netzwerkelement-Parameters ist beispielsweise durch ein Messen mittels eines Sensors oder durch eine manuelle Eingabe eines Benutzers möglich.

In weiteren Ausführungsformen des Verfahrens erfolgt das Erfassen des Zustandes des Stromnetzes fortlaufend. Das Ableiten der Schalthandlung erfolgt, wenn der Wert des Stromnetz-Parameters um zumindest einen vorbestimmten Betrag von einem vorgegebenen Sollwert für den Stromnetz-Parameter abweicht und/oder wenn der Wert des Netzwerkelement-Parameters um zumindest einen vorbestimmten Betrag von einem vorgegebenen Sollwert für den Netzwerkelement-Parameter abweicht.

Durch das fortlaufende Erfassen des Zustandes des Stromnetzes kann das Stromnetz im laufenden Betrieb beobachtet werden, um bei sich andeutenden oder akut auftretenden Störungen oder kritischen Zuständen schnell und effizient eingreifen zu können. Das Ableiten geeigneter Schalthandlungen erfolgt erst, wenn der Zustand des Stromnetzes sich derart ändert, dass vorbestimmte Korridore um vorgegebene Sollwerte für Stromnetz- und/oder Netzwerkelement-Parameter verlassen werden.

In weiteren Ausführungsformen des Verfahrens erfolgt das Erfassen des Zustands des Stromnetzes unter Verwendung eines das Stromnetz modellierenden, die Netzwerkelemente beschreibenden Netzmodells.

Das Netzmodell umfasst dabei insbesondere die Topologie des Stromnetzes sowie statische Daten zu den Netzwerkelementen des Stromnetzes wie beispielsweise deren Kapazität oder Blindleistung.

Die Verwendung des Netzwerkmodells zur Erfassung des Zustands des Stromnetzes erlaubt es beispielsweise, Abhängigkeiten der von dem Stromnetz umfassten Netzwerkelemente untereinander zu modellieren und zu berücksichtigen.

In weiteren Ausführungsformen des Verfahrens erfolgt das Ableiten der zumindest einen Schalthandlung zur Behebung des erfassten Zustands des Stromnetzes unter Verwendung eines von einem jeweiligen Zustand des Stromnetzes abhängige Schaltvorgänge umfassenden Aktionsmodells und/oder unter Verwendung des Netzmodells.

Das Aktionsmodell umfasst dabei insbesondere von einem jeweiligen Zustand des Stromnetzes abhängige Aktionen, das heißt Schaltvorgänge, die geeignet sind, den jeweiligen Zustand des Stromnetzes zu verändern beziehungsweise zu beheben. Die Schaltvorgänge basieren auf dem zuvor formalisierten Wissen aus Handbüchern, Richtlinien, Kommunikationsprotokollen, Übereinkünften zwischen unterschiedlichen Stromnetzbetreibern und/oder anderen Quellen.

Somit liegt das zuvor formalisierte Wissen als Menge möglicher, von dem Zustand des Stromnetzes abhängiger Schalthandlungen vor, so dass ein effizientes und schnelles Beheben des Zustands, beispielsweise während einer kritischen Situation im Stromnetz, möglich sind.

Die zusätzliche Verwendung des Netzmodells für das Ableiten der möglichen Schalthandlungen ermöglicht wiederum die Berücksichtigung von Abhängigkeiten der einzelnen Netzwerkelemente oder Teilnetzwerke untereinander.

In weiteren Ausführungsformen des Verfahrens werden das Netzmodell und/oder das Aktionsmodell in Form einer Logik-basierten Ontologie bereitgestellt.

Eine Ontologie setzt die Netzwerkelemente des Stromnetzes miteinander in Beziehung und formuliert beispielsweise deren Beziehungen und Abhängigkeiten untereinander. Eine mögliche Implementierung einer Ontologie stellt eine Regelbasis dar. Auf diese Weise lassen sich beispielsweise auch logische Bedingungen formulieren, die es unter anderem ermöglichen, die abgeleiteten Schalthandlungen auf Konsistenz und Plausibilität hin zu prüfen.

Derartige Ontologien ermöglichen die Anwendung effizienter Verfahren zum logischen Schließen (Reasoning), um abhängig von einem erfassten Zustand des Stromnetzes geeignete Aktionen, das heißt Schalthandlungen, zur Behebung des Zustandes abzuleiten.

Weiterhin können Ontologien formal auf Korrektheit, das heißt auf Widerspruchsfreiheit, getestet werden, so dass das in ihnen formalisierte Expertenwissen validiert werden kann.

Es ist auch möglich, eine Ontologie graphisch darzustellen und so dem technischen Personal eines oder mehrerer kooperierender Stromnetzbetreiber sowie weiteren Beteiligten ein geeignetes, gemeinsames Format zur Darstellung des formalisierten Wissens zu ermöglichen.

Ein weiterer Vorteil von Ontologien ist die einfache Änderbarkeit einer vorhandenen Ontologie, um die durch die Ontologie dargestellte Wissensbasis beispielsweise zu erweitern oder zu berichtigen.

Ontologien ermöglichen es zudem, durch Verwendung automatischer Logik-basierter Methoden aus bekannten Klassen oder Typen von Wissensbeständen neue Instanzen zu generieren, das heißt bisher unbekannte Spezial-Situationen oder Zustände des Stromnetzes aus bekannten allgemeinen Situationen oder Zuständen des Stromnetzes abzuleiten.

Der Einsatz Logik-basierter Ontologien erlaubt es, Wissen aus einer Vielzahl unterschiedlichster Wissensquellen zu formalisieren und in einer Wissensbasis zusammenzufassen. Zudem können viele weitere Informationsquellen genutzt werden, beispielsweise das System des European Energy Exchange (EEX), das System des Verbands Europäischer Übertragungsnetzbetreiber (ENTSO-E), Geoinformationssysteme, Satelliten, Sensor-Messdaten oder Simulationsdaten.

Da eine entsprechende Ontologie das vorhandene Expertenwissen umfasst, und da dieses Wissen auch validierbar ist, liegen mit der Ontologie sämtliche möglichen Lösungen für bekannte und unbekannte kritische Situationen, das heißt Zustände des Stromnetzes, vor. Dadurch wird der Entscheidungsprozess, welche Schalthandlungen tatsächlich ausgeführt werden sollen, erheblich beschleunigt. Der gesamte Prozess gestaltet sich für die Beteiligten transparent. Weiterhin wird die Kooperation zwischen den Beteiligten vereinfacht, da jeder Beteiligte über dasselbe formalisierte Wissen verfügt und in einfacher Weise auf dieses Wissen zugreifen kann.

Je nachdem, welcher Inferenz-Mechanismus für das logische Schließen verwendet wird, beispielsweise abduktives, deduktives oder fallbasiertes Schließen, kann eine Ontologie auch dazu verwendet werden, Situationen oder Zustände des Stromnetzes zu erkennen, die noch nicht kritisch sind, sich aber in Kürze zu einer kritischen Situation ausweiten könnten. In diesen Fällen kann ein System, das auf einer derartigen Ontologie basiert, Warnungen erzeugen, um Schalthandlungen zur Behebung des Zustandes des Stromnetzes anzuweisen, bevor derartige kritische Situationen tatsächlich eintreten.

Weiterhin ist es möglich, durch die logische Formulierung von Konflikten zwischen unterschiedlichen Aktionen, das heißt unterschiedlichen Schalthandlungen, sowie zwischen unterschiedlichen Aktionen und bestimmten Zuständen des Stromnetzes falsche Entscheidungen zu vermeiden oder im Nachhinein zu korrigieren, um unerwünschte Effekte im Stromnetz zu vermeiden.

Insgesamt sind Logik-basierte Ontologien daher besonders geeignet, Brown-Outs und/oder Black-Outs wirkungsvoll zu vermeiden beziehungsweise zu beheben.

Bei dem Verfahren erfolgt ein Ableiten einer Mehrzahl von Schalthandlungen von dem erfassten Zustand des Stromnetzes. Anschließend erfolgt ein Filtern der Mehrzahl der abgeleiteten Schalthandlungen auf eine Anzahl von abgeleiteten Schalthandlungen, sowie ein Anweisen der Anzahl von abgeleiteten Schalthandlungen zur Behebung des erfassten Zustands des Stromnetzes.
Es ist somit möglich, dass mehrere Schalthandlungen von dem aktuellen Zustand des Stromnetzes abgeleitet werden, die zur Behebung des Zustands dienen können. Dabei ist es möglich, dass es sich um alternative Schalthandlungen zur Behebung des Zustands handelt und/oder dass es sich um Sequenzen von Schalthandlungen handelt, wobei erst die vollständige Sequenz von Schalthandlungen zur Behebung des Zustands führen würde.

Das Filtern umfasst einen Konsistenzcheck zum Ermitteln von Inkonsistenzen oder ein Ausfiltern (logisch) widersprüchlicher Schaltanweisungen.
Vorteilhaft ist die Anzahl der abgeleiteten Schalthandlungen nach dem Filtern kleiner als die Mehrzahl der von dem erfassten Zustand des Stromnetzes abgeleiteten möglichen Schalthandlungen. Auf diese Weise wird die Entscheidungsfindung über die tatsächlich anzuwendenden Schalthandlungen vereinfacht und das Verfahren beschleunigt.
Bei dem Verfahren umfasst das Filtern ein Berechnen physikalischer Effekte in dem Stromnetz für die Mehrzahl der abgeleiteten Schalthandlungen.
Das Berechnen der physikalischen Effekte basiert dabei beispielsweise auf dem Netzmodell und/oder auf einem elektromechanischen Simulationsmodell des Stromnetzes. In diesem Fall werden diejenigen Schalthandlungen ausgefiltert, die für sich oder in Kombination mit anderen Schalthandlungen zu unerwünschten physikalischen Effekten im Stromnetz führen würden, wie beispielsweise einer Überlastung einzelner Netzwerkelemente, Spannungsschwankungen oder unnötigen Abschaltungen beziehungsweise Abtrennungen von Netzwerkelementen. Es lassen sich auch dynamische Effekte beispielsweise beim vollständigen Wiederhochfahren des Stromnetzes zur Wiederherstellung der Stromversorgung nach einem Black-Out vorausberechnen und berücksichtigen.

Somit erfolgt das Filtern derart, dass ein Auftreten von technischen Seiteneffekten verhindert wird. Das Filtern kann nach bestimmten, domänenspezifischen Kriterien erfolgen, wie beispielsweise absoluter Energieverlust (total loss of power).

In weiteren Ausführungsformen des Verfahrens umfasst das Filtern ein Bewerten und/oder ein Ranking jeder der Mehrzahl der abgeleiteten Schalthandlungen.

Das Bewertung beziehungsweise das Ranking ermöglichen es, die möglichen Schaltvorgänge hinsichtlich bestimmter, domänenspezifischer Kriterien zu sortieren. Ein Benutzer kann somit schnell erfassen, bei welchen der Alternativen für mögliche Schalthandlungen es sich um vielversprechende Lösungen handelt. Gleichzeitig ist es möglich, eine weniger hoch bewertete Schalthandlung zur Ausführung zu bringen, wenn beispielsweise andere, dem System unbekannte Faktoren dafür sprechen, die betreffende Schalthandlung einer an sich höher bewerteten Schalthandlung vorzuziehen.

Die Bewertung und/oder das Ranking können dabei insbesondere unter Berücksichtigung der mittels des Netzmodells und/oder des elektromechanischen Simulationsmodells des Stromnetzes berechneten Ergebnisse erfolgen.

Weiterhin wird ein Computerprogrammprodukt vorgeschlagen, welches auf einer programmgesteuerten Einrichtung, zum Beispiel einem Computer, die Durchführung eines entsprechenden Verfahrens veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie vorbeschriebene Vorrichtung in Frage.

Des Weiteren wird ein Datenträger mit einem gespeicherten Computerprogramm mit Befehlen vorgeschlagen, welche die Durchführung eines entsprechenden Verfahrens auf einer programmgesteuerten Einrichtung veranlasst.

Weiterhin wird eine Vorrichtung zum Betreiben eines eine Vielzahl von Netzwerkelementen umfassenden Stromnetzes mit den Merkmalen des Anspruchs 12 vorgeschlagen.

Die vorgeschlagene Vorrichtung ermöglicht eine formalisierte Vorgehensweise zur Behebung beispielsweise kritischer Zustände eines Stromnetzes und vermeidet ein Verfahren nach Versuch und Irrtum. Auf diese Weise können Stromausfälle in Form von Brown-Outs oder Black-Outs vermieden beziehungsweise behoben werden.

Ausführungsformen der Vorrichtung umfassen ein Kommunikationsmittel zur Kommunikation mit einer weiteren Vorrichtung der oben dargestellten Art.

Das Kommunikationsmittel zur Kommunikation ermöglicht beispielsweise einen Austausch der lokal abgeleiteten Schalthandlungen und ermöglicht damit den Abgleich der anzuwendenden abgeleiteten Schalthandlungen zwischen den Beteiligten, beispielsweise zwischen mehreren Netzwerkbetreibern untereinander. Auf diese Weise kann ein Brown-Out oder ein Black-Out effizient und wirksam behoben beziehungsweise vermieden werden, ohne dass unerwünschte Seiteneffekte im Stromnetz entstehen, die zu weiteren kritischen Situationen führen könnten.

### Dabei zeigen:

- Fig. 1: ein Ablaufdiagramm eines 1. Ausführungsbeispiels eines Verfahrens zum Betreiben eines eine Vielzahl von Netzwerkelementen umfassenden Stromnetzes;
- Fig. 2: ein Blockschaltbild eines Ausführungsbeispiels einer Vorrichtung zum Betreiben eines eine Vielzahl von Netzwerkelementen umfassenden Stromnetzes;
- Fig. 3: ein Ablaufdiagramm eines 2. Ausführungsbeispiels eines Verfahrens zum Betreiben eines eine Vielzahl von Netzwerkelementen umfassenden Stromnetzes;
- Fig. 4: ein Ablaufdiagramm eines 3. Ausführungsbeispiels eines Verfahrens zum Betreiben eines eine Vielzahl von Netzwerkelementen umfassenden Stromnetzes; und
- Fig. 5: eine Ontologie für ein Ausführungsbeispiel eines Verfahrens zum Betreiben eines eine Vielzahl von Netzwerkelementen umfassenden Stromnetzes.

In den Figuren sind gleiche oder funktionsgleiche Elemente mit denselben Bezugszeichen versehen worden, sofern nichts anderes angegeben ist.

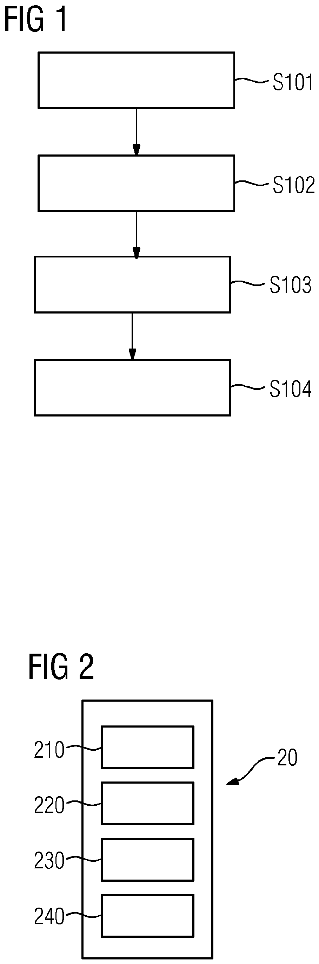

Fig. 1 zeigt ein Ablaufdiagramm eines Ausführungsbeispiels eines Verfahrens zum Betreiben eines eine Vielzahl von Netzwerkelementen umfassenden Stromnetzes.

In einem ersten Schritt S101 erfolgt ein Erfassen eines Zustands des Stromnetzes.

In einem zweiten Schritt S102 erfolgt ein Ableiten zumindest einer Schalthandlung für zumindest ein Netzwerkelement von dem erfassten Zustand des Stromnetzes zur Behebung des erfassten Zustands des Stromnetzes.

In einem dritten Schritt S103 erfolgt ein Anweisen der zumindest einen abgeleiteten Schalthandlung für das zumindest eine Netzwerkelement zur Behebung des erfassten Zustands des Stromnetzes.

In einem vierten Schritt S104 erfolgt ein Anzeigen der abgeleiteten Schalthandlung mittels einer Anzeigevorrichtung für einen Benutzer. Der Benutzer ist beispielsweise technisches Personal eines Netzwerkbetreibers, der das Stromnetz betreibt. Das technische Personal kann somit die Entscheidung treffen, ob die angezeigte Schalthandlung ausgeführt werden soll.

Alternativ erfolgt in dem vierten Schritt S104 ein automatisches Ausführen der abgeleiteten Schalthandlung durch eine Schaltvorrichtung zur Steuerung des Stromnetzes. Das technische Personal kann hierbei jedoch gegebenenfalls steuernd eingreifen, sofern die abgeleitete Schalthandlung beispielsweise nicht plausibel erscheint oder aus anderen Gründen nicht ausgeführt werden sollte.

Fig. 2 zeigt ein Blockschaltbild eines Ausführungsbeispiels einer Vorrichtung 20 zum Betreiben eines eine Vielzahl von Netzwerkelementen umfassenden Stromnetzes.

Die Vorrichtung 20 ist Teil eines in Fig. 2 der Übersichtlichkeit halber nicht dargestellten Netzwerkelementes des Stromnetzes und umfasst ein Erfassungsmittel 210 zum Erfassen eines Zustands des Stromnetzes, ein Ableitungsmittel 220 zum Ableiten zumindest einer Schalthandlung für zumindest ein Netzwerkelement von dem erfassten Zustand des Stromnetzes zur Behebung des erfassten Zustands des Stromnetzes sowie ein Anweisungsmittel 230 zum Anweisen der zumindest einen abgeleiteten Schalthandlung für das zumindest eine Netzwerkelement zur Behebung des erfassten Zustands des Stromnetzes.

Weiterhin umfasst die Vorrichtung 20 ein Kommunikationsmittel 240 zur Kommunikation mit einer weiteren entsprechenden Vorrichtung. Auf diese Weise ist es möglich, Informationen bezüglich des Zustandes des Stromnetzes sowie bezüglich der abgeleiteten Schalthandlung mit anderen Netzwerkelementen auszutauschen.

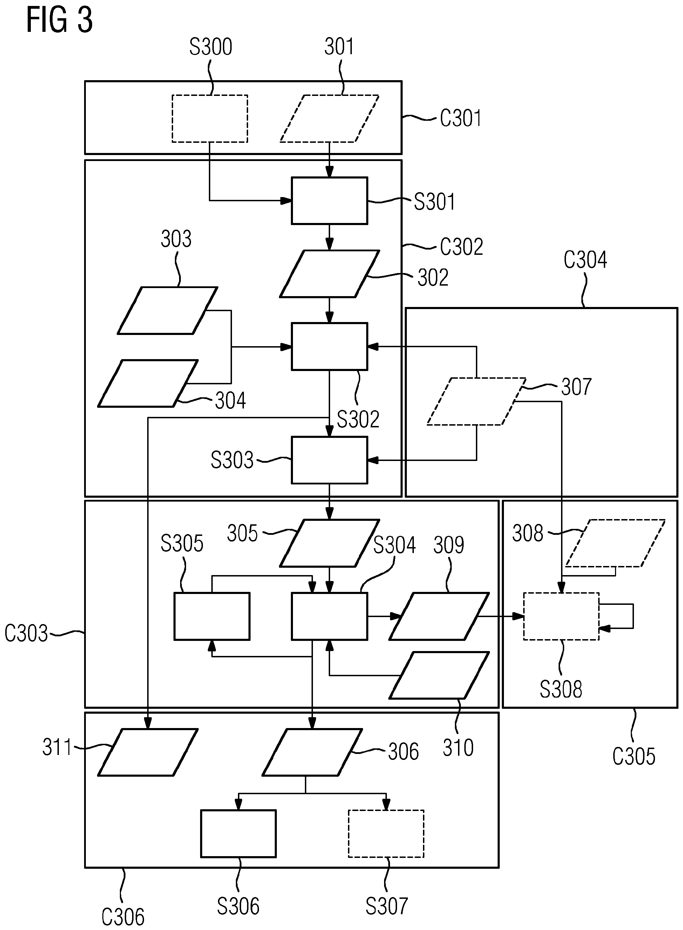

Fig. 3 zeigt ein Ablaufdiagramm eines weiteren Ausführungsbeispiels eines Verfahrens zum Betreiben eines eine Vielzahl von Netzwerkelementen umfassenden Stromnetzes.

Ausgangssituation für das im Folgenden dargestellte Ausführungsbeispiel ist ein vorangegangener Black-Out und somit ein teilweiser oder vollständiger Ausfall des Stromnetzes. Mittels des vorgeschlagenen Verfahrens kann die Stromversorgung im Rahmen eines kontrolliert ausgeführten Wiederherstellungsplans wiederhergestellt werden. Für die Planung und Ausführung des Wiederherstellungsplans werden gemäß dem vorgeschlagenen Verfahren formale mathematische und logische Validierungsverfahren mit einem elektromechanischen Simulationsmodell des Stromnetzes kombiniert. Auf diese Weise liefert das Verfahren Entscheidungshilfen für den oder die Stromnetzbetreiber.

In Offline-Szenarien kann das Verfahren verwendet werden, um generische Wiederherstellungspläne zu validieren. In Online-Szenarien, das heißt beispielsweise nach einem Stromausfall, kann das Verfahren verwendet werden, um den am besten geeigneten Wiederherstellungsplan auszuwählen. Dabei basiert das Verfahren auf manuell oder automatisch generierten Wiederherstellungsplänen, Richtlinien des Netzbetreibers, Handbüchern und/oder Informationen über den Zustand des Stromnetzes und/oder über den Stromausfall.

Es wird somit vorgeschlagen, ein formales logisches Modell des Stromnetzes mit einem elektromechanischen Simulationsmodell des Stromnetzes zu kombinieren, um einen gegebenen, manuell oder automatisch erzeugten, Wiederherstellungsplan für das Stromnetz nach einem Stromausfall zu validieren, gegebenenfalls anzupassen und die Schritte des Wiederherstellungsplans anschließend auszuführen.

Das vorgeschlagene Verfahren benötigt folgende Eingaben:
a) einen konkreten Wiederherstellungsplan, der die möglichen Schritte, das heißt insbesondere Schalthandlungen, für mögliche Zustände des Stromnetzes zur Behebung des jeweiligen Zustands definiert. Der Wiederherstellungsplan kann manuell erstellt oder automatisch durch einen Computer-implementierten Algorithmus generiert worden sein.
b) Richtlinien zur Wiederherstellung der Stromversorgung nach einem Stromausfall sowie zu berücksichtigende Vereinbarungen, zum Beispiel bezüglich Kommunikationsprotokollen, Generator- oder Last-Prioritäten oder bilateralen Abkommen zwischen Übertragungsnetzbetreibern.
c) Informationen bezüglich des Stromausfalls, Informationen zum Zustand des Stromnetzes, zum Beispiel bezüglich ausgefallener Leitungen, noch verfügbarer Generatoren, Layout und Frequenzen von Inselnetzen (Islands).
d) eine Menge von durch die Netzbetreiber definierten Konsistenzbedingungen, zum Beispiel die Vorgabe, dass zwei Inselnetze nicht miteinander verbunden werden dürfen, wenn ihre jeweilige Frequenz und/oder Phase um mehr als einen vorgegebenen Schwellwert voneinander abweichen.
e) ein elektromechanisches Simulationsmodell zumindest von Teilen des Stromnetzes zur Vorhersage von Energieflüssen und/oder Systemverhalten des Stromnetzes.

Das vorgeschlagene Verfahren liefert die folgenden Ausgaben:
a) Hinweise auf mögliche Verstöße von durch den Wiederherstellungsplan geplanten Handlungen gegen Richtlinien oder Konsistenzbedingungen
b) Empfehlungen für die am besten geeigneten zulässigen Handlungen zur Wiederherstellung der Stromversorgung für jeden Schritt des Wiederherstellungsplans
c) Automatisches Auslösen der am besten geeigneten zulässigen Handlungen zur Wiederherstellung der Stromversorgung für jeden Schritt des Wiederherstellungsplans.

Das vorgeschlagene Verfahren ist in Fig. 3 als schematisches Ablaufdiagramm dargestellt und wird im Folgenden näher erläutert.

Da herkömmliche Wiederherstellungspläne in der Regel auf natürlicher Sprache basieren, ist in solchen Fällen ein optionaler initialer Formalisierungsschritt S300 möglich. Der Formalisierungsschritt S300 kann durch informationstechnische Werkzeuge unterstützt werden, die eine gegebene Syntax in eine formale Beschreibung umsetzen. Falls eine automatische Übersetzung zumindest für bestimmte Teile eines Wiederherstellungsplans nicht möglich ist, beispielsweise aufgrund von Mehrdeutigkeiten oder unterschiedlichen möglichen Interpretationen von Begriffen, ist ein manueller Eingriff zur Auflösung möglich.

Der Schritt S300 wird von der Komponente C301 zur Spezifikation des Wiederherstellungsplans ausgeführt.

In Schritt S301 erfolgt eine Semi-automatische Prozess-Formalisierung. Die Eingabe 301 für den Schritt S301 ist eine informelle Beschreibung des Wiederherstellungsplans. Ziel des Schrittes S301 ist es, eine formalisierte Beschreibung 302 des Wiederherstellungsplans zu erzeugen. Die formalisierte Beschreibung 302 erfasst sämtliche Arbeitsabläufe und Handlungen des Wiederherstellungsplans mithilfe einer Maschinen-lesbaren Syntax sowie wohldefinierten Semantiken, die auf mathematischer Logik basieren. Es können verschiedene logische Formalismen verwendet werden, um die Arbeitsabläufe und Handlungen zu beschreiben, zum Beispiel Petrinetze, Prozessalgebren oder Realzeitautomaten (Timed Automata).

In Schritt S302 erfolgt eine Validierung der formalisierten Beschreibung 302 des Wiederherstellungsplans. Dabei wird die formalisierte Beschreibung 302 des Wiederherstellungsplans automatisch auf Verklemmungen (Deadlocks) oder Inkonsistenzen geprüft. Dies geschieht beispielsweise mittels bekannter Verfahren zum logischen Schließen oder Inferenzalgorithmen. Als Eingabe für den Schritt S302 dienen beispielsweise Informationen 307 über den Zustand des Stromnetzes. Die Informationen 307 über den Zustand des Stromnetzes sind Teil der Datenakquisitions-Komponente C304.

Auf diese Weise wird die formalisierte Beschreibung 302 des Wiederherstellungsplans auf formale Konsistenz mit den zugrunde liegenden Richtlinien, Konsistenzbedingungen und Informationen 307 zum Zustand des Stromnetzes geprüft und validiert.

Für die Validierung in Schritt S302 können die folgenden Ansätze verwendet werden:
a) Bedingungen, zum Beispiel Richtlinien 303 und Konsistenzbedingungen 304, werden als Abfragen (Queries) in einer Abfragesprache formuliert, die dann auf dem formalisierten Modell, das heißt auf der formalisierten Beschreibung 302, ausgeführt werden. Auf diese Weise kann beispielsweise durch eine geeignete Abfrage, die an einen entsprechenden Interferenzalgorithmus (semantic reasoner) gerichtet wird, geprüft werden, ob es (theoretisch) einen Ablauf zur Wiederherstellung der Stromversorgung gibt, der das Stromnetz aus dem aktuellen Zustand in einen vollständig verbundenen und vollständig betriebsfähigen Zustand überführt.
b) Bedingungen, zum Beispiel Richtlinien 303 und Konsistenzbedingungen 304, werden als Prozesswissen formuliert, das dem Prozessmodell zur Wiederherstellung, das heißt der formalisierten Beschreibung 302 des Wiederherstellungsplans, hinzugefügt wird. Das ergänzte Modell wird dann hinsichtlich Inkonsistenzen geprüft, beispielsweise durch einen Nachweis eines logischen Widerspruchs im Modell.

Für den Fall, dass die Durchführung des Schrittes S302 zur Erkennung eines Problems in der formalisierten Beschreibung 302 des Wiederherstellungsplans führt, wird das Problem zusammen mit einer Erklärung 311 an den Netzwerbetreiber gemeldet.

In Schritt S303 erfolgt eine Berechnung von Wiederherstellungsstrategien auf Basis der in Schritt S302 validierten formalisierten Beschreibung 302. Da in der Regel mehrere Möglichkeiten zur Wiederherstellung der Stromversorgung bestehen, das heißt mehrere Schalthandlungen oder Sequenzen von Schalthandlungen möglich sind, können in Schritt S303 unterschiedliche Strategien zur Wiederherstellung ermittelt werden, indem die möglichen Ausführungspfade vom aktuellen Zustand des Stromnetzes zu einem gewünschten Zustand berechnet werden. Die Informationen 307 über den Zustand des Stromnetzes können als Eingabe für den Schritt S303 verwendet werden.

Eine Strategie zur Wiederherstellung ist dabei definiert als Sequenz von Handlungen, das heißt insbesondere Schalthandlungen, die ausgeführt werden, um das Stromnetz von einem gegebenen Zustand in einen Zielzustand zu überführen. Alle dabei möglichen Zustandsüberführungen sind in der gegebenen formalisierten Beschreibung 302 des Wiederherstellungsplans enthalten.

Ausgabe des Schrittes S303 ist eine Menge möglicher Strategien 305 zur Wiederherstellung der Stromversorgung.

Die Schritte S301 - S303 werden von der Validierungs-Komponente C302 ausgeführt.

Die Menge möglicher Strategien 305 zur Wiederherstellung der Stromversorgung dient als Eingabe für den Schritt S304 zur Bewertung und zum Ranking der Menge der möglichen Strategien 305.

Dabei wird eine Implementierung eines Top-k-Ansatzes verwendet, der eine Performanz-Heuristik für die möglichen Strategien 305 mit einer Simulations-basierten Bewertung der möglichen Strategien 305 kombiniert. Die Performanz-Heuristik schätzt die Qualität der möglichen Strategien 305 basierend auf strukturellen Eigenschaften einer jeweiligen möglichen Strategie. Beispiele für strukturelle Eigenschaften einer solchen Performanz-Heuristik sind gewichtete Kombinationen von Indikatoren wie den folgenden:
- Anzahl der notwendigen Handlungen, das heißt insbesondere der notwendigen Schalthandlungen, oder
- Summe der Last- bzw. Generator-Verluste für alle Inselnetze

Die Performanz-Heuristik wird zur Erzeugung eines initialen Rankings der möglichen Strategien 305 hinsichtlich ihrer geschätzten Qualität verwendet. Ein entsprechender Algorithmus kann beispielsweise wie folgt implementiert werden:
Schritt 1: Ermitteln der Menge der möglichen Strategien 305
Schritt 2: Schätzen eines Wertes für die Qualität jeder der Menge der möglichen Strategien 305 unter Verwendung der gegebenen Performanz-Heuristik
Schritt 3: Für die Top-k Strategien 309 der möglichen Strategien 305: Bestimmen eines Wertes für die Performanz jeder der Top-k Strategien 309 unter Verwendung einer Energiefluss-Simulation S308 des Stromnetzes und Bewerten der Validität jeder der Top-k Strategien 309. Die Energiefluss-Simulation S308 des Stromnetzes basiert auf den Zustandsinformationen 307 des Stromnetzes sowie einem zugrunde liegenden elektromechanischen Simulationsmodell des Stromnetzes 308 und kann wiederholt ausgeführt werden. Das Ergebnis der Energiefluss-Simulation S308 des Stromnetzes ist eine detaillierte Bewertung 310 der Top-k Strategien 309. Die Energiefluss-Simulation S308 des Stromnetzes sowie das zugrunde liegenden elektromechanischen Simulationsmodell des Stromnetzes 308 sind Bestandteil der Stromnetz-Simulationskomponente C305.
Schritt 4: Falls die am schlechtesten bewertete Strategie der Top-k Strategien 309 besser ist als der heuristische Wert der nächstbesseren Strategie Top-k+1: Beenden des Algorithmus und Ausgabe der bestbewerteten Top-k Strategie 309; sonst: Bewerten der Top-k+1 Strategie unter Verwendung der Energiefluss-Simulation S308 des Stromnetzes und Wiederholen des Schritts 4 mit k=k+1.

Die Ausgabe des oben dargestellten Algorithmus ist die Ausgabe des Schritts S304 des in Fig. 3 dargestellten Ablaufdiagramms und dient als Eingabe für Schritt S305. Schritt S305 dient zur Verfeinerung der in Schritt S304 vorgenommenen Bewertung und des Rankings der Menge der möglichen Strategien 305. Basierend auf den Ergebnissen der Ausführungen der Energiefluss-Simulation S308 des Stromnetzes kann in Schritt S305 die Parametrisierung der in Schritt 3 des Algorithmus angewendeten Performanz-Heuristik aktualisiert werden. So können beispielsweise die oben genannten gewichteten Kombinationen von Indikatoren angepasst werden, um schrittweise die Ergebnisse der Performanz-Heuristik und die Ergebnisse der Energiefluss-Simulation S308 des Stromnetzes einander anzunähern. Dieses Verfahren einer schrittweisen Anpassung wird auch als Matching bezeichnet.

Die Schritte S304 und S305 können somit mehrfach ausgeführt werden, um die Bewertung und das Ranking der Menge der möglichen Strategien 305 zu verbessern.

Die Schritte S304 und S305 werden von der Komponente C303 zur Auswahl einer Strategie ausgeführt.

Ergebnis und Ausgabe des Schrittes S304 beziehungsweise der aufeinander folgenden Ausführung der Schritte S304 und S305 ist eine nach ihrer Bewertung geordnete Liste möglicher Strategien 306. Die nach ihrer Bewertung geordnete Liste möglicher Strategien 306 wird in Schritt S306 angewiesen, das heißt beispielsweise einem Benutzer zur weiteren Verwendung angezeigt. Dabei wird beispielsweise die in Schritt 3 des oben dargestellten Algorithmus ermittelte beste Strategie empfohlen.

Schritt 3 des oben dargestellten Algorithmus kann auch als Echtzeit-Algorithmus implementiert werden, der die Top-k Strategien im Laufe der Zeit schrittweise verbessert. Dem Benutzer ist es daher möglich, situationsabhängig zu entscheiden, ob die anfänglich bestbewertete Strategie zur Anwendung kommen soll, oder ob gegebenenfalls Zeit für weitere Berechnungen und damit eine optimierte Strategie zur Verfügung steht.

In Fällen, in denen Benutzerinteraktion nicht erwünscht oder nicht möglich ist, erfolgt die Ausführung der bestbewerteten Strategie in Schritt S307 automatisch. Dabei wird die bestbewertete Strategie, das heißt eine Sequenz von Handlungen, insbesondere Schalthandlungen, die ausgeführt werden müssen, um das Stromnetz von einem gegebenen Zustand in einen Zielzustand zu überführen, an eine Ausführungseinheit übergeben. Die Ausführungseinheit ist dabei Teil einer Steuerungssoftware zur Steuerung des Stromnetzes. Die Ausführung entsprechender Schalthandlungen und zugehöriger Kontrollfunktionen kann lokal durch einen zentralisierten Controller oder verteilt unter Verwendung mehrerer kooperierender lokaler Controller ausgeführt werden.

Die Schritte S306 und S307 sowie die Meldung eines Problems zusammen mit einer Erklärung 311 an den Netzwerbetreiber sind Bestandteil der Empfehlungskomponente C306.

Die jeweilige Komponenten C301 bis C306 können hardwaretechnisch und/oder auch softwaretechnisch implementiert sein. Bei einer hardwaretechnischen Implementierung kann die jeweilige Komponente als Vorrichtung oder als Teil einer Vorrichtung, zum Beispiel als Computer oder als Mikroprozessor ausgebildet sein. Bei einer softwaretechnischen Implementierung kann die jeweilige Komponente als Computerprogrammprodukt, als eine Funktion, als eine Routine, als Teil eines Programmcodes oder als ausführbares Objekt ausgebildet sein.

Das vorgeschlagene Verfahren sowie die vorgeschlagene Vorrichtung dienen dazu, die notwendige manuelle Arbeit des technischen Personals eines Stromnetzbetreibers durch eine Validierung eines gegebenen Wiederherstellungsplans mittels der Validierungs-Komponente C302 sowie durch eine Energiefluss-Simulation S308 des Stromnetzes zu reduzieren. Letztere dient insbesondere zur Vermeidung einer zeitaufwändigen Vorgehensweise nach dem Prinzip Versuch und Irrtum.

Weiterhin reduzieren das vorgeschlagene Verfahren sowie die vorgeschlagene Vorrichtung die Fehlerrate während der Ausführung eines Wiederherstellungsplans, da beispielsweise fehlerhafte oder widersprüchliche Handlungen, die gegen Richtlinien oder Vereinbarungen verstoßen, herausgefiltert und suboptimale Strategien dem Benutzer nicht vorgeschlagen werden.

Das vorgeschlagene Verfahren sowie die vorgeschlagene Vorrichtung sind für aktuelle Stromnetz-Infrastrukturen einsetzbar und gleichzeitig offen für zukünftige intelligente Stromnetze (Smart Grids), die eine verbesserte Bereitstellung von Echtzeit-Daten durch Messungen von Netzwerkelementen des Stromnetzes (Power Management Units) bieten können. Insbesondere können die Bewertung und das Ranking der möglichen Strategien sowie die Energiefluss-Simulation des Stromnetzes auf Basis derartiger verbesserter Daten optimiert werden.

Durch die Verwendung der Energiefluss-Simulation des Stromnetzes während des Entscheidungsprozesses bezüglich der anzuwendenden Strategie zur Wiederherstellung der Stromversorgung ist es zudem möglich, dynamische Effekte einer in Betracht gezogenen Strategie auf das Stromnetz zu berücksichtigen, bevor die Schalthandlungen der betreffenden Strategie tatsächlich im Stromnetz ausgeführt werden.

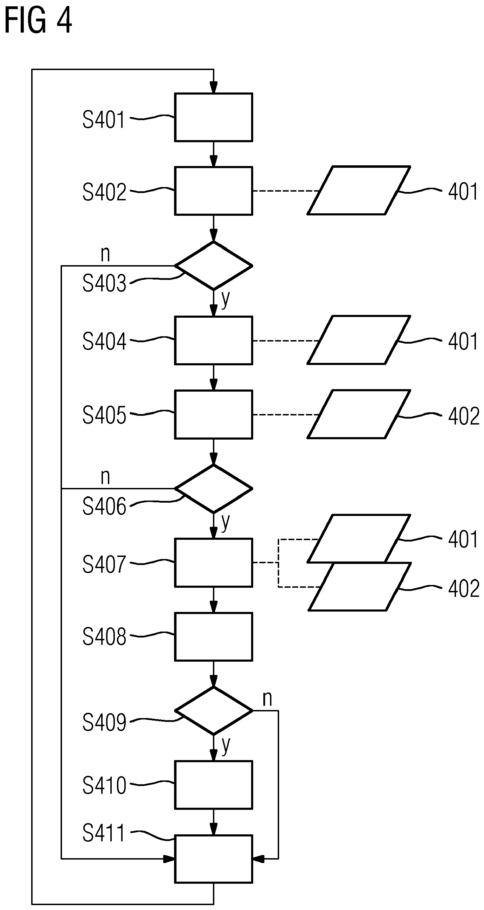

Fig. 4 zeigt ein Ablaufdiagramm eines weiteren Ausführungsbeispiels eines Verfahrens zum Betreiben eines eine Vielzahl von Netzwerkelementen umfassenden Stromnetzes.

Es wird vorgeschlagen, das Netzmodell und/oder das Aktionsmodell in Form einer Logik-basierten Ontologie bereitzustellen, um durch Logik-basiertes Schließen auf Basis der Ontologie auch bisher unbekannte Fehler oder Störungen im Stromnetz anhand beobachteter Eigenschaften zu klassifizieren. Auf diese Weise wird eine dynamische, vorbeugende Steuerung des Stromnetzes ermöglicht, die Kaskaden von Ereignissen vermeidet, an deren Ende anderenfalls im schlechtesten Fall ein teilweiser oder vollständiger Black-Out des Stromnetzes stehen könnte.

Dies wird durch den Einsatz semantischer, das heißt Logik-basierter, Verfahren für eine automatische Informationsermittlung und/oder Interpretation, Erzeugung und Validierung von Abwehrplänen gegen Netzwerkstörungen sowie den Austausch relevanter Informationen zwischen allen Beteiligten, zum Beispiel verschiedenen Stromnetzbetreibern, erreicht.

Das vorgeschlagene Verfahren kann dabei auch Ergebnisse einer elektromechanischen und Markt-basierten Simulation berücksichtigen, um verschiedene vorliegende Abwehrpläne gegen Netzwerkstörungen zu bewerten. Das Verfahren umfasst zumindest folgende Komponenten:
- eine Ontologie-basierte Modellierung von Fehlerklassen sowie zugehöriger, beobachtbarer Erscheinungsformen in Netzwerkelementen des Stromnetzes;
- Inferenz-Verfahren zum logischen Schließen, zum Beispiel deduktives Schließen, abduktives Schließen oder fallbasiertes Schließen, um bisher unbekannte Situationen zu klassifizieren, um zum Beispiel eine bekannte Fehlerklasse, die der aktuellen Situation gleicht, zu ermitteln und die unbekannte Situation dieser ermittelten Fehlerklasse zuzuordnen;

- eine Ontologie-basierte Modellierung von Verbindungen zwischen Fehlerklassen und möglichen Gegenmaßnahmen, von Abhängigkeiten zwischen verschiedenen Gegenmaßnahmen und von Abhängigkeiten zwischen Gegenmaßnahmen und Zuständen des Stromnetzes;
- Ontologie-basierte Modelle zur Kommunikation von beobachteten Erscheinungsformen, erkannten Fehlern beziehungsweise Fehlerklassen und beabsichtigten Handlungen, insbesondere Schalthandlungen, zwischen den Beteiligten;
- Inferenz-Verfahren zur Identifizierung von kompatiblen und inkompatiblen möglichen Handlungen, insbesondere Schalthandlungen, unter Berücksichtigung unterschiedlicher Beteiligter und/oder des Zustandes des Stromnetzes;
- elektromechanische Simulationen zur Bewertung und zum Ranking möglicher Handlungen mit dem Ziel, einem Stromnetzbetreiber konkrete Empfehlungen für Handlungen bereitzustellen;
- eine Implementierung eines oder mehrerer abgeleiteter Abwehrpläne unter Berücksichtigung aktueller, Situationsabhängiger Daten wie zum Beispiel Phasenwerte, Verbrauch etc., beispielsweise mittels fallbasierten Schließens;
- eine automatischen Ausführung der möglichen Handlungen, insbesondere Schalthandlungen, zur Behebung der aktuellen Situation im Stromnetz, sofern die automatische Ausführung geeignet erscheint.

Das Verfahren ist in dem in Fig. 4 gezeigten Ablaufdiagramm dargestellt und wird iterativ durchgeführt, wobei eine empfohlene Lösung für die aktuelle Situation, das heißt eine oder mehrere Handlungen, insbesondere Schalthandlungen, kontinuierlich unter Berücksichtigung neuer Beobachtungen, insbesondere Informationen zum Zustand des Stromnetzes, neuberechnet und entsprechend der Neuberechnung angepasst werden.

In Schritt S401 erfolgt ein fortlaufendes Erfassen des Zustandes des Stromnetzes. Dabei werden insbesondere Messwerte von Netzelementen des Stromnetzes ermittelt.

In Schritt S402 erfolgt ein Klassifizieren des aktuellen Zustands des Stromnetzes, das heißt der aktuellen Situation, unter Berücksichtigung eines oder mehrerer ontologischer Modelle 401 der oben bezeichneten Art.

In Schritt S403 erfolgt eine Fallunterscheidung. Falls für die aktuell erkannte Situation eine oder mehrere Lösungen bekannt sind, fährt das Verfahren mit Schritt S404 fort.

In Schritt S404 erfolgt ein Logik-basiertes Filtern der ermittelten möglichen Lösungen, wiederum basierend auf dem einen oder den mehreren ontologischen Modellen 401 der oben bezeichneten Art.

Falls keine Lösung für die aktuell erkannte Situation bekannt ist, springt das Verfahren zu Schritt S411.

Auf den Schritt S404 folgt in Schritt S405 ein Simulationsbasiertes Filtern der ermittelten möglichen Lösungen, basierend auf einer oder mehreren elektromechanischen Simulationen 402 der oben bezeichneten Art zur Bewertung und zum Ranking möglicher Handlungen der ermittelten möglichen Lösungen.

In Schritt S406 erfolgt eine weitere Fallunterscheidung. Falls nach den Filterschritten S404 und S405 noch eine oder mehrere mögliche Lösungen verblieben sind, erfolgt in Schritt S407 eine Bewertung der verbliebenen möglichen Lösungen. Die Bewertung dient dabei insbesondere einem Ranking der verbliebenen möglichen Lösungen und erfolgt auf Basis des einen oder der mehreren ontologischen Modelle 401 sowie der elektromechanischen Simulationen 402.

Falls nach dem Filtern keine Lösung für die aktuell erkannte Situation verblieben ist, springt das Verfahren zu Schritt S411.

In Schritt S408 erfolgt ein Instanziieren der verbliebenen möglichen Lösungen. Die logisch abgeleiteten, formalisiert vorliegenden Lösungen werden dabei in konkrete Handlungsanweisungen, das heißt Schalthandlungsanweisungen, umgewandelt.

In Schritt S409 erfolgt eine Fallunterscheidung bezüglich der automatischen Ausführung der ermittelten möglichen Lösungen beziehungsweise der von den ermittelten möglichen Lösungen umfassten Schalthandlungen zur Behebung der aktuellen Situation, das heißt des aktuellen Zustands des Stromnetzes.

Falls eine automatische Ausführung erfolgen soll, wird in Schritt S410 die beste der ermittelten Lösungen angewendet. Das heißt, es werden die von der besten der ermittelten Lösungen umfassten Schalthandlungen zur Ausführung durch Netzwerkelemente angewiesen und somit ausgeführt.

Falls keine automatische Ausführung erfolgen soll, erfolgt in Schritt S411 eine Anzeige der ermittelten besten Lösungen zur Behebung der aktuellen Situation. Somit kann das technische Personal schnell und effektiv eine der ermittelten besten Lösungen zur Ausführung bringen.

Das Verfahren wird fortlaufend ausgeführt und springt somit wieder zu Schritt S401.

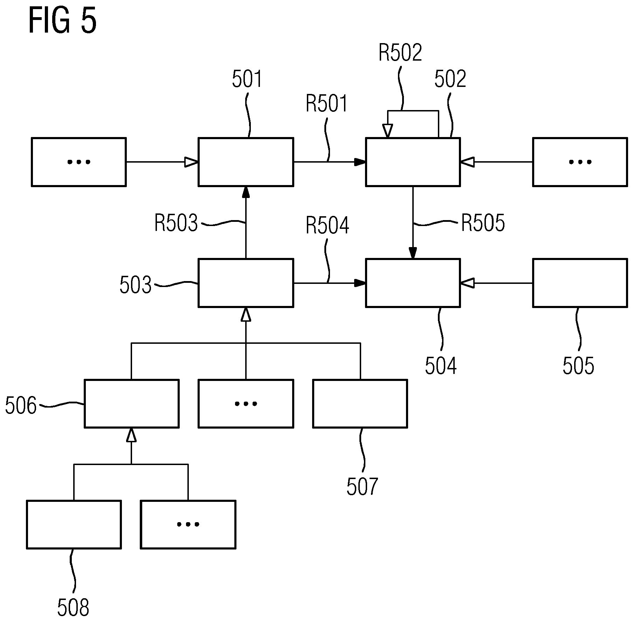

Fig. 5 zeigt eine Ontologie für ein Ausführungsbeispiel eines Verfahrens zum Betreiben eines eine Vielzahl von Netzwerkelementen umfassenden Stromnetzes. Die dargestellten Komponenten haben dabei die folgenden Bezeichnungen:
- 501:: FaultMode
- R501:: hasRemedy
- 502:: Solution
- R502:: IsIncompatibleWith
- 503:: Component
- R503:: isInMode
- R504:: shows
- R505:: hasCounterIndication
- 504:: Manifestation
- 505:: abgeleitete Manifestation Mi
- 506:: Generator
- 507:: Consumer
- 508:: GasTurbine

Ein FaultMode 501 stellt eine Fehlerklasse dar. Eine Component 503 kann in einem solchen FaulMode sein und ist daher über die Beziehung isInMode R503 mit der Klasse FaultMode 501 verbunden.

Weiterhin kann eine Fehlerklasse 501 eine Lösung haben und ist daher über die Beziehung R501, hasRemedy, mit der Klasse 502, Solution, verbunden. Eine Instanz der Klasse 502, Solution, kann dabei mittels der Beziehung R502, isIncompatibleWith, zu einer anderen Instanz der Klasse 502 als inkompatibel mit dieser anderen Instanz der Klasse 502 markiert werden.

Eine Component 503 hat bestimmte Erscheinungsformen im Stromnetz und ist daher über die Beziehung R504, shows, mit der Klasse 504, Manifestation, verbunden. Von der Klasse 504, Manifestation, ist die Klasse 505 als spezielle Manifestation Mi abgeleitet.

Die Klassen 506, Generator, und 507, Consumer, sind spezielle Components und daher von der Klasse 503, Component, abgeleitet.

Ein spezieller Generator 506 ist eine GasTurbine, die daher als Klasse 508 von der Klasse 506 abgeleitet ist.

Eine entsprechende Formalisierung für die in Fig. 5 dargestellte Ontologie eines Stromnetzes mittels beschreibender Logik ist im Folgenden gegeben:
GasTurbine 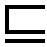 Generator
Generator 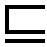 Component
Component 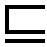 ∃shows.Manifestation
∃hasRemedy.Solution 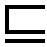 FaultMode
Solution1 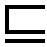 BisIncompatibleWith.Solution2
Solution1 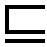 ∃hasCounterIndication.Mn
Component 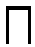 ∃isInMode.FM1 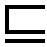 ∃shows.M1 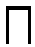 ... 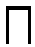 ∃shows.Mn

Das vorgeschlagene Verfahren ermöglicht eine automatische, Ontologie-basierte Interpretation der in einer durch einen bestimmten Zustand des Stromnetzes charakterisierten Situation vorliegenden Informationen. Die Menge der Informationen, die das technische Personal eines Stromnetzbetreibers berücksichtigten muss, um den aktuellen Zustand des Stromnetzes zu beheben, wird reduziert, indem dem technischen Personal eine vorvorverarbeitete Zusammenfassung aller zur Verfügung stehenden Informationen zu dem aktuellen Zustand des Stromnetzes zur Verfügung gestellt wird.

Die Zusammenführung von Informationen zu Gegenmaßnahmen, Wechselbeziehungen oder Widersprüchen zwischen einzelnen Schalthandlungen ermöglicht es somit, lediglich eine überschaubare Zahl möglicher, validierter Lösungen anzuweisen oder auszugeben, anstatt eine große Anzahl ungeordneter und nicht geprüfter Lösungen zu erzeugen, aus der manuell eine geeignete Lösung ausgewählt werden müsste.

Das Einbinden elektromechanischer Simulationen des Stromnetzes reduziert die Zahl möglicher Lösungen weiterhin und stellt zudem ein Mittel zur Bewertung und/oder zum Ranking der möglichen Lösungen entsprechend domänenspezifischer Qualitätskriterien dar.

Des Weiteren ermöglicht die formale Darstellung der Informationen einen einfachen und effizienten Informationsaustausch zwischen den Beteiligten und ermöglicht eine Koordination der zu ergreifenden Gegenmaßnahmen. Dies kann entweder durch Anzeigen der ermittelten Lösungen geschehen oder automatisch, wenn sichergestellt ist, dass während der Validierung beispielsweise widersprüchliche Lösungen ausgeschlossen werden.

Das Verfahren kann sowohl global auf das Stromnetz angewendet werden als auch als ein so genanntes Special Protection Scheme an vordefinierten kritischen Stellen im Stromnetz.

## Patentansprüche

1. Verfahren zum Betreiben eines eine Vielzahl von Netzwerkelementen umfassenden Stromnetzes, mit den Schritten:
Erfassen (S101) eines Zustands des Stromnetzes,
Ableiten (S102) einer Mehrzahl von Schalthandlungen für zumindest ein Netzwerkelement von dem erfassten Zustand des Stromnetzes zur Behebung des erfassten Zustands des Stromnetzes,
Filtern der Mehrzahl der abgeleiteten Schalthandlungen auf eine Anzahl von abgeleiteten Schalthandlungen, und
Anweisen (S103) der Anzahl von abgeleiteten Schalthandlungen für das zumindest eine Netzwerkelement zur Behebung des erfassten Zustands des Stromnetzes,
wobei das Filtern ein Berechnen physikalischer Effekte in dem Stromnetz für die Mehrzahl der abgeleiteten Schalthandlungen umfasst, **dadurch gekennzeichnet, dass** das Filtern ferner einen Konsistenzcheck zum Ermitteln von Inkonsistenzen oder ein Ausfiltern logisch widersprüchlicher Schaltanweisungen umfasst.

2. Verfahren nach Anspruch 1, **dadurch gekennzeichnet, dass** das Anweisen der Anzahl von abgeleiteten Schalthandlungen ein Anzeigen (S104) der Anzahl von abgeleiteten Schalthandlungen mittels einer Anzeigevorrichtung für einen Benutzer umfasst.

3. Verfahren nach Anspruch 1 oder 2, **dadurch gekennzeichnet, dass** das Anweisen (S103) der Anzahl von abgeleiteten Schalthandlungen ein automatisches Ausführen (S104) der Anzahl von abgeleiteten Schalthandlungen durch eine Schaltvorrichtung zur Steuerung des Stromnetzes umfasst.

4. Verfahren nach einem der vorstehenden Ansprüche, **gekennzeichnet durch**:
Erfassen eines Wertes eines Stromnetz-Parameters, und
Erfassen des Zustands des Stromnetzes in Abhängigkeit von dem erfassten Wert des Stromnetz-Parameters.

5. Verfahren nach Anspruch 4, **gekennzeichnet durch**:
Erfassen eines Zustands zumindest eines der Vielzahl der Netzwerkelemente, und
Erfassen des Wertes des Stromnetz-Parameters in Abhängigkeit von dem erfassten Zustand des zumindest einen Netzwerkelements.

6. Verfahren nach Anspruch 5, **gekennzeichnet durch**:
Erfassen eines Wertes eines Netzwerkelement-Parameters, und Erfassen des Zustands des Netzwerkelements in Abhängigkeit von dem erfassten Wert des Netzwerkelement-Parameters.

7. Verfahren nach einem der Ansprüche 4 - 6, **dadurch gekennzeichnet,**
**dass** das Erfassen (S101) des Zustandes des Stromnetzes fortlaufend erfolgt, und
**dass** das Ableiten (S102) der Mehrzahl von Schalthandlungen erfolgt, wenn der Wert des Stromnetz-Parameters um zumindest einen vorbestimmten Betrag von einem vorgegebenen Sollwert für den Stromnetz-Parameter abweicht und/oder wenn der Wert des Netzwerkelement-Parameters um zumindest einen vorbestimmten Betrag von einem vorgegebenen Sollwert für den Netzwerkelement-Parameter abweicht.

8. Verfahren nach einem der vorstehenden Ansprüche, **dadurch gekennzeichnet, dass** das Erfassen (S101) des Zustands des Stromnetzes unter Verwendung eines das Stromnetz modellierenden, die Netzwerkelemente umfassenden Netzmodells erfolgt.

9. Verfahren nach Anspruch 8, **dadurch gekennzeichnet, dass** das Ableiten (S102) der Mehrzahl von Schalthandlungen zur Behebung des erfassten Zustands des Stromnetzes unter Verwendung eines von einem jeweiligen Zustand des Stromnetzes abhängige Schaltvorgänge umfassenden Aktionsmodells und/oder unter Verwendung des Netzmodells erfolgt.

10. Verfahren nach einem der Ansprüche 8 oder 9, **dadurch gekennzeichnet, dass** das Netzmodell und/oder das Aktionsmodell in Form einer Logik-basierten Ontologie bereitgestellt werden.

11. Verfahren nach Anspruch 1, **dadurch gekennzeichnet, dass** das Filtern ein Bewerten und/oder ein Ranking jeder der Mehrzahl der abgeleiteten Schalthandlungen umfasst.

12. Vorrichtung (20) zum Betreiben eines eine Vielzahl von Netzwerkelementen umfassenden Stromnetzes, mit:
Erfassungsmittel (210) zum Erfassen (S101) eines Zustands des Stromnetzes,
Ableitungsmittel (220) zum Ableiten (S102) einer Mehrzahl von Schalthandlungen für zumindest ein Netzwerkelement von dem erfassten Zustand des Stromnetzes zur Behebung des erfassten Zustands des Stromnetzes,
Filtermittel zum Filtern der Mehrzahl der abgeleiteten Schalthandlungen auf eine Anzahl von abgeleiteten Schalthandlungen, und
Anweisungsmittel (230) zum Anweisen (S103) der Anzahl von abgeleiteten Schalthandlungen für das zumindest eine Netzwerkelement zur Behebung des erfassten Zustands des Stromnetzes,
wobei das Filtern ein Berechnen physikalischer Effekte in dem Stromnetz für die Mehrzahl der abgeleiteten Schalthandlungen umfasst, **dadurch gekennzeichnet, dass** das Filtern ferner einen Konsistenzcheck zum Ermitteln von Inkonsistenzen oder ein Ausfiltern logisch widersprüchlicher Schaltanweisungen umfasst.

13. Vorrichtung nach Anspruch 12, **gekennzeichnet durch** Kommunikationsmittel (240) zur Kommunikation mit einer weiteren Vorrichtung (20) nach Anspruch 12.

## Claims

1. Method for operating a power network comprising a multiplicity of network elements, having the steps of:
sensing (S101) a state of the power network,
deriving (S102) a plurality of switching actions for at least one network element from the sensed state of the power network in order to correct the sensed state of the power network,
filtering the plurality of derived switching actions to a number of derived switching actions, and
assigning (S103) the number of derived switching actions for the at least one network element in order to correct the sensed state of the power network,
the filtering process comprising calculating physical effects in the power network for the plurality of derived switching actions, **characterized in that** the filtering process also comprises a consistency check in order to determine inconsistencies or filtering out logically contradictory switching instructions.

2. Method according to Claim 1, **characterized in that** the process of assigning the number of derived switching actions comprises displaying (S104) the number of derived switching actions for a user by means of a display apparatus.

3. Method according to Claim 1 or 2, **characterized in that** the process of assigning (S103) the number of derived switching actions comprises automatically executing (S104) the number of derived switching actions by means of a switching apparatus for controlling the power network.

4. Method according to one of the preceding claims, **characterized by**:
recording a value of a power network parameter, and
sensing the state of the power network on the basis of the recorded value of the power network parameter.

5. Method according to Claim 4, **characterized by**:
sensing a state of at least one of the multiplicity of network elements, and
recording the value of the power network parameter on the basis of the sensed state of the at least one network element.

6. Method according to Claim 5, **characterized by**:
recording a value of a network element parameter, and
sensing the state of the network element on the basis of the recorded value of the network element parameter.

7. Method according to one of Claims 4-6, **characterized in that**
the state of the power network is sensed (S101) continuously, and
the plurality of switching actions are derived (S102) if the value of the power network parameter differs from a predefined desired value for the power network parameter by at least a predetermined amount and/or if the value of the network element parameter differs from a predefined desired value for the network element parameter by at least a predetermined amount.

8. Method according to one of the preceding claims, **characterized in that** the state of the power network is sensed (S101) using a network model which models the power network and comprises the network elements.

9. Method according to Claim 8, **characterized in that** the plurality of switching actions for correcting the sensed state of the power network are derived (S102) using an action model which comprises switching operations dependent on a respective state of the power network and/or using the network model.

10. Method according to either of Claims 8 and 9, **characterized in that** the network model and/or the action model is/are provided in the form of a logic-based ontology.

11. Method according to Claim 1, **characterized in that** the filtering process comprises assessing and/or ranking each of the plurality of derived switching actions.

12. Apparatus (20) for operating a power network comprising a multiplicity of network elements, having:
sensing means (210) for sensing (S101) a state of the power network,
derivation means (220) for deriving (S102) a plurality of switching actions for at least one network element from the sensed state of the power network in order to correct the sensed state of the power network,
filter means for filtering the plurality of derived switching actions to a number of derived switching actions, and
assigning means (230) for assigning (S103) the number of derived switching actions for the at least one network element in order to correct the sensed state of the power network, the filtering process comprising calculating physical effects in the power network for the plurality of derived switching actions, **characterized in that** the filtering process also comprises a consistency check in order to determine inconsistencies or filtering out logically contradictory switching instructions.

13. Apparatus according to Claim 12, **characterized by** communication means (240) for communicating with a further apparatus (20) according to Claim 12.

## Revendications

1. Procédé d'exploitation d'un réseau électrique comprenant une pluralité d'éléments de réseau, comportant les étapes suivantes :
détection (S101) d'un état du réseau électrique ;
déduction (S102) d'une pluralité d'opérations de commutation pour au moins un élément de réseau à partir de l'état détecté du réseau électrique pour remédier à l'état détecté du réseau électrique ;
filtrage de la pluralité des opérations de commutation déduites pour obtenir un nombre d'opérations de commutation déduites et
instruction (S103) du nombre d'opérations de commutation déduites pour l'au moins un élément de réseau pour remédier à l'état détecté du réseau électrique,
le filtrage incluant un calcul d'effets physiques dans le réseau électrique pour la pluralité des opérations de commutation déduites, **caractérisé en ce que** le filtrage comprend en outre un contrôle de consistance pour déterminer des inconsistances ou éliminer par filtrage des instructions de commutation logiquement contradictoires.

2. Procédé selon la revendication 1, **caractérisé en ce que** l'instruction du nombre d'opérations de commutation déduites comprend l'affichage (S104) du nombre d'opérations de commutation déduites au moyen d'un dispositif d'affichage pour un utilisateur.

3. Procédé selon la revendication 1 ou 2, **caractérisé en ce que** l'instruction (S103) du nombre d'opérations de commutation déduites inclut une exécution automatique (S104) du nombre d'opérations de commutation déduites par un dispositif de commutation pour la commande du réseau électrique.

4. Procédé selon l'une des revendications précédentes, **caractérisé par** :
la détection d'une valeur d'un paramètre de réseau électrique et
la détection de l'état du réseau électrique en fonction de la valeur détectée du paramètre de réseau électrique.

5. Procédé selon la revendication 4, **caractérisé par** :
la détection d'un état d'au moins un élément de réseau de la pluralité des éléments de réseau et
la détection de la valeur du paramètre de réseau électrique en fonction de l'état détecté de l'au moins un élément de réseau.

6. Procédé selon la revendication 5, **caractérisé par** :
la détection d'une valeur d'un paramètre d'élément de réseau et
la détection de l'état de l'élément de réseau en fonction de la valeur détectée du paramètre d'élément de réseau.

7. Procédé selon l'une des revendications 4-6, **caractérisé en ce que** :
la détection (S101) de l'état du réseau électrique s'effectue en continu et
la déduction (S102) de la pluralité d'opérations de commutation s'effectue lorsque la valeur du paramètre de réseau électrique diffère d'au moins une valeur absolue prédéterminée d'une valeur de consigne donnée du paramètre de réseau électrique et/ou lorsque la valeur du paramètre d'élément de réseau diffère d'au moins une valeur absolue prédéterminée d'une valeur de consigne donnée du paramètre d'élément de réseau.

8. Procédé selon l'une des revendications précédentes, **caractérisé en ce que** la détection (S101) de l'état du réseau électrique s'effectue en utilisant un modèle de réseau qui modélise le réseau électrique et qui comprend les éléments de réseau.

9. Procédé selon la revendication 8, **caractérisé en ce que** la déduction (S102) de la pluralité d'opérations de commutation pour remédier à l'état détecté du réseau électrique s'effectue en utilisant un modèle d'action comprenant des opérations de commutation qui dépendent d'un état respectif du réseau électrique et/ou en utilisant le modèle de réseau.

10. Procédé selon l'une des revendications 8 ou 9, **caractérisé en ce que** le modèle de réseau et/ou le modèle d'action sont fournis sous la forme d'une ontologie basée sur une logique.

11. Procédé selon la revendication 1, **caractérisé en ce que** le filtrage comprend une évaluation et/ou un classement de chacune de la pluralité des opérations de commutation déduites.

12. Dispositif (20) pour exploiter un réseau électrique comprenant une pluralité d'éléments de réseau, comportant :
un moyen de détection (210) pour la détection (S101) d'un état du réseau électrique ;
un moyen de déduction (220) pour la déduction (S102) d'une pluralité d'opérations de commutation pour au moins un élément de réseau à partir de l'état détecté du réseau électrique pour remédier à l'état détecté du réseau électrique ;
un moyen de filtrage pour le filtrage de la pluralité des opérations de commutation déduites pour obtenir un nombre d'opérations de commutation déduites
et
un moyen d'instruction (230) pour l'instruction (S103) du nombre d'opérations de commutation déduites pour l'au moins un élément de réseau pour remédier à l'état détecté du réseau électrique,
le filtrage incluant un calcul d'effets physiques dans le réseau électrique pour la pluralité des opérations de commutation déduites, **caractérisé en ce que** le filtrage comprend en outre un contrôle de consistance pour déterminer des inconsistances ou éliminer par filtrage des instructions de commutation logiquement contradictoires.

13. Dispositif selon la revendication 12, **caractérisé par** des moyens de communication (240) pour la communication avec un autre dispositif (20) selon la revendication 12.
